Europäisches Patentamt

European Patent Office

Office européen des brevets

(19)

(11) Publication number : **0 415 656 B1**

(12) **EUROPEAN PATENT SPECIFICATION**

(45) Date of publication of patent specification :
30.03.94 Bulletin 94/13

(51) Int. Cl.$^5$ : **A23G 3/00**, A23G 3/30

(21) Application number : **90309276.5**

(22) Date of filing : **23.08.90**

(54) **Production of sorbitol coated comestible.**

(30) Priority : **25.08.89 US 399725**

(43) Date of publication of application :
**06.03.91 Bulletin 91/10**

(45) Publication of the grant of the patent :
**30.03.94 Bulletin 94/13**

(84) Designated Contracting States :
**BE CH DE DK ES FR GB GR IT LI NL SE**

(56) References cited :
**EP-A- 0 228 999
EP-A- 0 229 594
EP-A- 0 273 856
US-A- 4 238 510
US-A- 4 317 838
PATENT ABSTRACTS OF JAPAN vol. 13, no.
532 (C-659)(3880), 28th November 1989; & PJ -
A - 1218551 (TOWO KASEI KOGYO K.K.)
31.08.1989**

(73) Proprietor : **WARNER-LAMBERT COMPANY
201 Tabor Road
Morris Plains New Jersey 07950 (US)**

(72) Inventor : **Zamudio-Tena, Jose F.
95-1/2 Mills St.
Morristown, New Jersey 07960 (US)**
Inventor : **Silva, Jose N.
3445 58th St.
Woodside, Queens, New York 11377 (US)**
Inventor : **Glass, Michael
10-15 Ellis Avenue
Fair Lawn, New Jersey 07410 (US)**

(74) Representative : **Tesch, Rudolf et al
c/o Gödecke AG, Patentwesen
D-79090 Freiburg (DE)**

EP 0 415 656 B1

Jouve, 18, rue Saint-Denis, 75001 PARIS

## Description

The present invention relates to an improved process for producing a sorbitol coated comestible, and more particularly to a process for producing a sorbitol coated comestible having a smoother and glossier appearance than those of prior art and capable of being dyed without the color fading or becoming blotchy or mottled over time, and also to sorbitol coated comestibles produced therefrom.

In the past, chewing gums in the form of shaped centers or cores, e.g. pellet gums, have been coated both with sugar and sugarless coatings to produce a candy-like, crunchy outer taste in the mouth with a chewable gum center portion. Conventionally, the core is a soft chewing gum portion, whereas the coating is crunchy or hard. In the case of sugarless coatings, aqueous solutions of xylitol, mannitol, maltitol and sorbitol, known as syrups, have been primarily employed. Such syrups may contain additives such as moisture absorbing compounds, anti-adherent compounds, dispersing agents, film-forming agents or binders.

U.S. Patent No. 4,127,677 discloses a xylitol-coated chewing gum. The coating is applied via a coating syrup containing from about 55% to 75% solids of which from about 95% to about 99.5% is xylitol. The solids also include about 0.5% to about 1.5% of colorant (e.g., titanium dioxide), and about 0.5% to about 1.5% binder and/or suspending agent, (e.g. gum arabic).

U.S. Patent No. 4,238,510 discloses a sugarless coated comestible whose coating comprises sweet material in crystalline form. The coating consists essentially of sorbitol alone or in admixture with mannitol and/or hydrogenated starch hydrolysate. The sorbitol is disclosed as being present in an amount within the range of from about 45% to about 90% by weight of the coating. It also discloses a method for applying the sugarless coating to centers. The method includes the steps of applying to the centers a first coating syrup which contains a sweetener such as sorbitol and/or other non-sugar sweetener, for example, mannitol or hydrogenated starch hydrolysate, an adhesion or binder component and a film-forming component, to thereby coat the centers with the first coating syrup, and a dusting mix applied to the centers coated with the first coating syrup. The dusting mix includes one or more sweeteners, such as employed in the first coating syrup, in powder form, and a moisture absorbing component, an anti-sticking component and a dispersing agent. It is disclosed that if desired, a second coating syrup may be applied to smooth out the coating of the centers and provide a shine thereto. The second coating generally includes ingredients similar to that present in the dusting mix but dispersed in water.

U.S. Patent No. 4,317,838 discloses a method for forming a sugarless coating on centers of chewing gum or other comestibles which includes the steps of applying to the centers a coating syrup which contains a sweetener such as sorbitol and/or other non-sugar sweetener, an adhesion or binder component such as gum arabic, a film-forming component, an anti-adherent or filler component, and a dispersing agent. A dusting mix including one or more sweeteners, such as employed in the coating syrup, in powder form, and a moisture absorbing component, an anti-adhering component and a dispersion agent are also employed.

EPA-A-0 273 856 discloses a process for producing a sorbitol coated comestible in which an anhydrous edible core is coated with at least two coating solutions wherein the first coating solution includes a sorbitol solution, crystalline sorbitol powder, at least one film-forming agent, and at least one crystallization retardant, and the second coating solution includes the same components with significantly smaller amounts of the crystalline sorbitol powder.

U.S. Patent No. 4,753,790 discloses a method for forming a sorbitol coating on centers of chewing gum or other comestibles without employing a dusting mix which includes the steps of applying to the centers at least two coating syrups, beginning with a first coating syrup that contains a saturated sorbitol solution, crystalline sorbitol, a film-forming component and at least one crystallization retardant including calcium carbonate and/or titanium dioxide, in an aqueous solution. This is followed by a second coating syrup to smooth out the coating of the centers, similar in composition to the first syrup except that it employs more saturated sorbitol solution, less crystalline sorbitol, slightly more film-forming component and less crystallization retardant in an aqueous solution. This may be followed by an optional third binder coating solution and a fourth coating solution. Neither the first nor the second coating syrup is used in combination with a dusting mix.

The problems associated with forming a sorbitol coating on comestibles, e.g. chewing gum, have been many. These problems include, as disclosed by U.S. Patent No. 4,177,667, chipping, flaking and cracking of the coating upon the attainment of the desired coating thickness, mottling of the coating, poor texture (such as a rough surface) and lack of crunchiness upon the initial chewing of the comestible. In addition, sorbitol coatings are often difficult to mix into solution and as a result the final coating may exhibit a gritty or sandy texture. Without wishing to be bound by theory, it is believed that some of these problems may be due to inflexibility of the coating in response to the geometric shape of the comestible being coated, inefficiency of the film-forming properties of the coating, and a lack of uniformity in the crystallization of the sweetener throughout the coating. These coatings also suffer from the inability to evenly disperse a water-soluble FD&C dye.

2

Sugarless coatings have traditionally been white for this reason, due to the presence of titanium dioxide, employed as a dispersing agent, and calcium carbonate, employed as a dispersing agent and bulking agent, both of which also function as white pigments and colorants. Dyes, when used, tend to be diluted and hidden by these compounds. Titanium dioxide also acts as a photolytic agent causing decomposition of the dyes, causing the color to fade and resulting in a blotchy, mottled appearance. As the color fades, the titanium dioxide visibly appears and further masks any remaining color. For this reason, until now, the use of colored dyes in sugarless coatings has been avoided.

U.S. Patent No. 4,753,790 addressed the problems of coating, chipping, flaking and lack of crunchiness through the use of crystalline sorbitol and crystallization retardants together with a film-forming component. However, because the crystallization retardants include titanium dioxide, blotchy, mottled color appearance still results when FD&C dyes are used with the coating disclosed by this patent.

Therefore, a process for producing a sorbitol coated comestible without titanium dioxide whose coating can be dyed without the color fading or becoming blotchy or mottled, in addition to having good appearance, good texture, good flexibility relative to the shape of the comestible being coated, good film-forming properties, and good crunchiness, would be a welcome contribution to the art. Such a contribution is provided by this invention.

## SUMMARY OF THE INVENTION

This invention provides a process for producing a sorbitol coated comestible whose coating can be dyed without the color fading or becoming blotchy or mottled and which has good appearance, good texture, good flexibility, good film-forming properties and good crunchiness. That is, the coated comestible so prepared has a smooth, hard and crunchy coating, which is capable of being dyed without the color fading or becoming blotchy or mottled. The sorbitol coating is obtained by applying to the comestible two coating solutions, each solution comprising a saturated sorbitol solution, a crystalline sorbitol powder, one or more film-forming agents, which are optional for the second solution, and one or more crystallization retardants, including powdered gum arabic, and then drying the coated comestible after each coating is applied. The amounts of saturated sorbitol solution, crystalline sorbitol powder and the specific crystallization retardants is such that amounts outside the required ranges, either above or below, results in coatings deficient in one or more of the desired properties set forth heretofore. The coating solution can additionally contain binders, plasticizers and moisture absorbants, as well as other known in the art additives, such as, for example, dyes and artificial sweeteners. Also provided are the sorbitol coated comestibles produced by the process of this invention.

Thus, this invention provides a process for producing a sorbitol coated comestible which comprises applying to a substantially anhydrous edible core first and second coating solutions comprising sorbitol to coat the edible core,

wherein the first solution comprises,

(a) 50 to 85 wt %, preferably 60 to 75 wt %, sorbitol solution comprising 65 to 75 wt %, preferably about 70 wt % sorbitol,

(b) 3 to about 20 wt %, preferably 5 to 15 wt %, most preferably 8 to 13 wt % crystalline sorbitol powder,

(c) 0.10 to 10 wt %, preferably 0.2 to 7 wt %, most preferably 0.3 to 5 wt % of at least one film-forming agent dispersed therein;

(d) 0.10 to 15 wt %, preferably 0.02 to 10 wt % of at least one crystallization retardant, including powdered gum arabic; and (e) water; and

wherein the second coating solution comprises,

(a) 50 to 90 wt %, preferably 70 to 80 wt % sorbitol solution comprising 65 to 75 wt %, preferably 70 wt % sorbitol;

(b) 5 to 20 wt %, preferably 8 to 14 wt %, crystalline sorbitol powder,

(c) 0.5 to 10 wt %, preferably 1 to 5 wt %, of at least one crystallization retardant, including powdered gum arabic; and after application of each coating solution, the solution is dried to prepare a final product which is a smooth, hard, and crunchy comestible.

## DETAILED DESCRIPTION OF THE INVENTION

The cores that are coated may be any substantially anhydrous, edible, or ingestible core capable of having a sorbitol coating applied to it. Such cores include chewing gums, candies, nuts such as almonds, chunks of licorice, jellies, bonbons cast in starch molds, popcorn (preferably that obtained from corn dough because of a more regular form), tablets obtained by compression of various baked or agglomerated masses, and pills or tablets for medicinal or therapeutic purposes. Preferably, chewing gum is utilized as the core whereby a sugarless coated chewing gum is prepared in a CHICLETS® (trademark of Warner-Lambert Company), pelletized, type of format.

By substantially anhydrous it is meant that the moisture content present in the edible core is not readily available or not readily capable of migrating through or from the core into any applied sorbitol coating. Thus, for example, candy cores comprising nougat or nougat-like material having a moisture content up to about 10 wt % may be utilized since the moisture available does not readily migrate into any applied sorbitol coating. When the core comprises a chewing gum, the chewing gum composition can have a moisture content up to about 5 wt % with up to about 3 wt % of water being preferred and up to about 2 wt % being more preferred and from 0.5 to 1.5 wt % being even more preferred.

The sorbitol solution used is a saturated solution of sorbitol. Those skilled in the art will appreciate that the concentration of the sorbitol in the saturated solution may vary in accordance with the temperature of the solution, but generally such saturated solution contains 65 to 75 wt % sorbitol with about 70 wt % being preferred. Sufficient saturated sorbitol solution is utilized in the coating solution such that when in combination with the crystalline sorbitol powder, and upon application of the coating solution to a coatable substrate, relatively uniform crystallization of the sorbitol occurs throughout the coating.

Similarly, sufficient crystalline sorbitol powder is utilized, relative to the amount of saturated sorbitol solution used, such that when the coating solution is applied to a coatable substrate, relatively uniform crystallization of the sorbitol throughout the coating occurs. Without wishing to be bound by any one theory, it is believed that the sorbitol crystalline powder acts as a seed crystal for the saturated sorbitol solution. Therefore, sufficient crystalline sorbitol powder is needed to result in the crystallization of the sorbitol contained in the coating solution. An insufficient amount of such crystalline powder can result in poor crystallization and coatings that do not properly adhere to the substrate. For example, in the application of multiple coatings, the coating being applied may dissolve the previous coating which was applied. This results in coatings having a poor or aesthetically undesirable appearance. Too much crystalline sorbitol powder can result in solutions which are too viscous. Such solutions would not distribute evenly and would not coat evenly on the cores to which they are applied. This would result in a sticky coating, a rough coating, and/or a pitted coating.

At least one film-forming agent is utilized in the preparation of the coating solution. It has been discovered that the film-forming agents have a critical particle size whereby maximum dissolution may be achieved. Whereas, most of the film-forming agents will generally remain dispersed in the coating solution, within the critical range more of the agent will be dissolved. This allows for a more homogenous, creamy coating solution. The film-forming agents are first passed through a colloidal mill to achieve a particle size of 5 to 15 μm (microns). The milling generally is performed when the agents are in aqueous medium, and then added to the sorbitol coating solution, but it is also possible to perform the colloidal milling directly on a sorbitol coating solution having the agent dispersed therein. The specific gravity of the solution at 55°C is 1.35 and the viscosity at 55°C is 0.080 ± 0.020 Pa.s (80 cps ± 20 cps) measured with a Brookfield Viscometer Model LVT spindle #3 at 30 RPM for one minute.

The table below shows the percent of film-forming agent in solution as a function of particle size.

| Size μm (Microns) (mean) | % in Solution |
|---|---|
| 25 | 1.0 |
| 20 | 2.0 |
| 15 | 25.0 |
| 10 | 45.0 |
| 5 | 20.0 |
| 3 | 5.0 |
| 1 | 2.0 |

These agents are dispersed in the coating solution. Representative film-forming agents include hydroxypropyl cellulose, methyl cellulose, (i.e., methyl ether of cellulose) ethyl cellulose, hydroxypropyl methyl cellulose, hydroxyethyl cellulose, carboxymethyl cellulose, gelatin and mixtures thereof. Preferably, a branched chained film-forming agent such as hydroxypropyl cellulose is utilized. Preferably, the hydroxypropyl cellulose has a Brookfield viscosity of not less than about 0.145 Pa.s (145 cps) for a 10% aqueous solution of 25°C; and the methyl cellulose can have a Brookfield viscosity 0.012 to 0.018 Pa.s (12 to 18 cps) for a 2% aqueous solution at 25°C. The coating solution can contain more than one film-forming agent and as such, for example, hydroxypropyl cellulose and methyl cellulose may be utilized. In such a combination the branched chained film-forming agent (e.g. hydroxypropyl cellulose) can be used in amounts of 0.10 to 5.0 wt %, with 0.2 to 1.0 wt % being preferred, and the straight chained film-forming agent (e.g. methyl cellulose) an be used in amounts of 0.10 to 5.0 wt %, with 0.2 to 1.0 wt % being preferred. The use of film-forming agents is optional in the second coating solution.

Again without wishing to be bound by any one theory the crystallization retardant is believed to prevent premature crystallization of the sorbitol and therefore prevent, for example, clumping or uneven coatings. The present invention replaces all of the titanium dioxide and some of the calcium carbonate crystallization retardant of U.S. Patent No. 4,753,790, with powdered gum arabic. It is believed that the removal of the titanium dioxide and the reduction in quantity of calcium carbonate decreases the crystallization retardant color hiding experienced with the compositions of this patent, as well as eliminating the photolytic decomposition caused by the titanium dioxide. It is also believed that the powdered gum arabic similarly serves to prevent premature crystallization of the sorbitol to prevent clumping and uneven coatings.

While mixtures of calcium carbonate and powdered gum arabic are preferred crystallization retardants, talc and/or magnesium trisilicate may also be included in this mixture. However, more preferably, a combination of calcium carbonate and powdered gum arabic is utilized. Calcium carbonate is utilized in amounts of 0.5 to 8 wt%, preferably 1.0 to 5.0 wt %, and more preferably 1.5 to 3.0 wt %. The powdered gum arabic is utilized in amounts of 0.05 to 10 wt %,, preferably 0.1 to 8.0 wt %, and more preferably 1.0 to 5.0 wt %. Other components such as water-soluble FD&C dyes, plasticizers, artificial sweeteners, and moisture absorbants may be added to the coating solution.

Plasticizers suitable for use are water soluble. Examples include polyethylene glycol; polyvinylpyrrolidone; oligomers of polypropylene glycol (e.g. such as those having an average molecular weight of 1000 to 2000); polyvinyl alcohol; low molecular weight polyvinyl acetate (e.g., such as average molecular weights of 800 to 1200); water-soluble natural gums, such as alginates, xanthan gum, carrageenan, agar, and mixtures thereof. The plasticizer is optionally used in the first coating solution in amount of 0.1 to 1.0 wt %, with 0.3 to 0.4 wt % being preferred. The second coating solution can optionally contain the plasticizer in amounts from 0.1 to 1.0 wt %, with 0.4 to 0.8 wt % being preferred. The preferred plasticizer is polyethylene glycol.

Moisture absorbants, when used, can be, for instance, mannitol, dicalcium phosphate, talc, magnesium stearate, calcium phosphate, calcium sulfate and silicas. Examples of silicas which may be useful include amorphous silicas, synthetic amorphous silicas, hydrous silica gels, synthetic silicas, sodium aluminum silicates, and precipitated amorphous silicon dioxide of ultra fine particle size. Usually, the moisture absorbent is used in amounts of 0.1 to 5.0 wt %, with 0.5 to 3.0 wt % being preferred, in the first coating solution. Preferably, mannitol is used as the moisture absorbent.

Artificial sweeteners such as the soluble saccharin salts, i.e. sodium or calcium saccharin salts, cyclamate salts, acesulfam-K, chlorinated sucrose derivatives, alitame and dihydrochalcones, and the free acid form of saccharin may optionally be added to the coating solutions. Dipeptide sweeteners such as L-aspartyl-L-phenylalanine methyl ester and materials described in U.S. Patent No. 3,492,131 may also be used. These are for illustrative purposes only and other artificial sweeteners are contemplated. These sweeteners may be used in amounts of 0.05 to 1.0 wt % based on the weight of the total coated comestible, and preferably 0.1 to 0.5 wt %. Usually, the first coating solution can contain 0.05 to 1.0 wt % based on the weight of the coating, preferably 0.1 to 0.8 wt % and most preferably 0.5 wt % of artificial sweetener. The second coating solution can usually contain 0.05 to 1.0 wt %, based on the weight of the coating, with 0.3 wt % to 0.5 wt % being preferred, of artificial sweetener.

In carrying out the process of the invention, the application of a coating solution can be repeated as many times as necessary to build up a desired coating weight and thickness on the edible cores. For example, 28% to 32% shell coating may be obtained from 30 to 35 applications of the first coating solution. The second coating solution may then be applied until the desired amount of thickness is added to the first shell coating. For example, a total shell coating of from 30% to 40% may be provided by 10 to 20 coating solution applications of the second coating solution.

The coating solution may be applied utilizing known techniques, such as Pan Coating and spray coating techniques. For example, in a pan coating method the comestible, e.g, chewing gum core, is placed in a revolving coating pan and dedusted during cool dry air. The coating solution is added to the revolving pan in portions until the desired amount or thickness of coating is deposited on the comestible. Before each subsequent portion of coating solution is applied, the prior coating is allowed to dry by gently flowing warm air at 26.6°C to 40.5°C at 7.08 to 14.15 cubic metres per minute (about 80°F to about 105°F at about 250 CFM to about 500 CFM) over the comestible. Generally, the coating dries in about 5 to about 10 minutes. At any desired point in the sequence of coating applications, flavoring agents and water-soluble FD&C dye coloring agents may be added if desired. Usually these agents are added as a separately applied coating to the shell being produced.

Flavoring Agents (flavorings) may be added to the coating. Suitable flavoring agents include those described hereinafter for use in the chewing gum compositions. When applied in the coating the flavoring agent is usually used in amounts of 0.01 to 0.2 wt %, with 0.08 to 0.17 wt % being preferred and 0.1 to 0.15 wt % being most preferred.

Coloring agents include dyes suitable for food, drug, and cosmetic application known as the FD&C dyes and lakes. The materials acceptable for the foregoing spectrum of use are preferably water soluble. Illustrative examples include the indigo dye, known as FD&C Blue No. 2, which is the disodium salt of 5, 5-indigotindisulfonic acid. Similarly, the dye known as FD&C Green No. 1, comprises a triphenylmenthane dye and is the monosodium salt of 4, [4-N-ethyl-p-(sulfoniumbenzylamino) diphenylmethylene][1-(N-ethyl-p-sulfoniumbenzyl)-2,5-cyclohexdienimine]. A full recitation of all FD&C and D&C colorants and their corresponding chemical structures may be found in the Kirk-Othmer Encyclopedia of Chemical Technology, 3rd Edition, in Volume 6 at pages 561-595. When applied in the coating the coloring agent is usually used in amounts of 0.01 to 0.25 wt %, with 0.05 to 0.1 wt % being more preferred, and about 0.08 wt % being most preferred.

After the final application of coating solution, and after such applied coating is dried, a sealing coating is preferably applied to the coated comestible. The sealing coating seals out moisture and aids in giving the coated comestible a polished appearance. The sealing coating comprises a sealant such as, for example, a blend of natural and artificial food grade waxes (such as a blend of beeswax, microcrystalline wax and paraffin wax), candelilla wax, and shellac. Usually, the sealing coating comprises 0.1 to 2 wt % of the total coating, with 0.5 to 1.5 wt % being preferred.

When the edible core is chewing gum, the chewing gum composition may be formulated from standard ingredients and by known methods in the art. The composition comprises a gum base and such additional additives as would ordinarily be included to comprise a sugarless chewing gum composition, i.e., sweeteners comprising natural or synthetic sugar substitutes, flavor, and fillers; or, where utilized, to comprise a sugar containing chewing gum composition, i.e., corn syrup, sugar, flavor, and fillers.

Suitable chewing gum compositions are described in U.S. Patent No. 4,514,422, U.S. Patent No. 4,579,738, U.S. Patent No. 4,581,234, and U.S. Patent No. 4,587,125.

The amount of gum base employed will vary greatly depending on various factors such as the type of base used, consistency desired and other components used to make the final product. In general, amounts of 5% to 45% by weight of the final chewing gum composition are acceptable for use in chewing gum compositions, with preferred amounts ranging from 15% to 25% by weight. The gum base used in this invention may be any water-soluble gum base well known in the art. Illustrative examples of suitable polymers in gum bases include both natural and synthetic elastomers and rubbers. For example, those polymers which are suitable in gum bases include, without limitation, substances of vegetable origin such as chicle, jelutong, gutta percha, and crown gum. Synthetic elastomers such as butadiene-styrene copolymers, isobutylene-isoprene copolymers, polyethylene, polyisobutylene, polyvinyl acetate, and mixtures thereof, are particularly useful.

The gum base composition may contain elastomer solvents to aid in softening the rubber component. Such elastomer solvents may comprise methyl, glycerol or pentaerythritol esters of rosins or modified rosins, such as hydrogenated, dimerized or polymerized rosins or mixtures thereof. Examples of elastomer solvents suitable for use herein include pentaerythritol ester of partially hydrogenated wood rosin, pentaerythritol ester of wood rosin, glycerol ester of partially dimerized rosin, glycerol ester of polymerized rosin, glycerol ester of tall oil rosin, glycerol ester of wood rosin, partially hydrogenated wood rosin, partially hydrogenated methyl ester of rosin, and mixtures thereof. The elastomer solvent may be employed in an amount ranging from 10% to 75% and preferably 45% to 70% by weight of the gum base.

A variety of traditional ingredients used as plasticizers or softeners such as lanolin, stearic acid, sodium stearate, potassium stearate, glyceryl triacetate, glycerin, lecithin and glyceryl monostearate may also be incorporated into the gum base to obtain a variety of desirable textures and consistency properties. These additional materials are generally employed in amounts of up to 30% by weight and preferably in amounts from 3% to 5% by weight of the final gum base composition.

The chewing gum compositions employing the instant gum bases generally contain sweetening agents. The sweetening agent may be selected from a wide range of materials including water-soluble agents, water-soluble artificial sweeteners, dipeptide based sweeteners, and chlorosucrose derivatives including mixtures thereof. Without being limited to particular sweeteners, representative illustrations encompass:

A. Water-soluble sweetening agents such as monosaccharides, disaccharides, and polysaccharides such as xylose, ribose, glucose, mannose, galactose, fructose, dextrose, sucrose, sugar, maltose, partially hydrolyzed starch or corn syrup solids and sugar alcohols such as sorbitol, xylitol, mannitol, hydrogenated starch hydrolysate and mixtures thereof;

B. Water-soluble artificial sweeteners such as the soluble saccharin salts, i.e., sodium or calcium saccharin salts, cyclamate salts, acesulfam-K, alitame, dihydrochalcones, maltitol, talin, and the free acid form of saccharin;

C. Dipeptide based sweeteners such as L-aspartyl-L-phenylalanine methyl ester and materials described in U.S. Patent No. 3,492,131; and

D. Chlorosucrose derivatives such as sucralose.

In general, the amount of sweetener will vary with the desired amount of sweetness selected for a particular chewing gum composition. This amount will normally be 0.01% to 90% by weight when using an easily extractable sweetener. The water-soluble sweeteners described in category A above, are preferably used in amount of 25% to 75%, more preferably in amounts of 65%, by weight of the final chewing gum composition. In contrast, the artificial sweeteners described in categories B and C are used in amounts of 0.005% to 5.0% and most preferably 0.05% to 2.5% by weight of the final chewing gum composition. These amounts are ordinarily necessary to achieve a desired level of sweetness independent from the flavor level achieved from flavor oils.

The chewing gum composition of this invention may additionally include the conventional additives of coloring agents such as titanium dioxide; emulsifiers such as lecithin and glyceryl monostearate; and fillers such as aluminum hydroxide, alumina, aluminum silicates, talc, dicalcium phosphate, calcium carbonate, and combinations thereof. Preferably the amount of filler used is about up to 25% by weight of the gum base.

Natural and synthetic flavoring agents well known to the chewing gum compositions of the instant invention. These flavoring agents may be chosen from synthetic flavor oils and flavoring aromatics, and/or oils, oleo resins and extracts derived from plants, leaves, flowers and fruits, and combinations thereof. Representative flavor oils include: spearmint oil, cinnamon oil, oil of wintergreen (methylsalicylate), peppermint oils, clove oil, bay oil, anise oil, eucalyptus oil, thyme oil, cedar leaf oil, oil of nutmeg, oil of sage, oil of bitter almonds, and cassia oil. Also useful are artificial, natural or synthetic fruit flavors, such as vanilla, and citrus oil, including lemon, orange, grape, lime and grapefruit and fruit essences including apple, pear, peach, strawberry, raspherry, cherry, plum, pineapple and apricot.

The amount of flavoring agent employed in the chewing gum shell is normally a matter of preference subject to such factors as flavor type, gum base type and strength desired. In general, amounts of 0.5% to 3.0% by weight of the final chewing gum composition are useable with amounts of 0.3% to 1.5% being preferred and 0.7% to 1.2% being most preferred.

It is preferred not to use titanium dioxide as a pigment due to the aforementioned problems. However, other pigments and colorants may be incorporated in amounts of up to 1% or higher by weight. Also, the colorants may include other dyes suitable for food, drug, and cosmetic applications, and known as FD&C dyes and lakes, which were described above.

The following examples are illustrative only.

In the examples that follow:

(1) the saturated sorbitol solution (liquid) contained about 70% solid sorbitol and 30% liquid, and was obtained from Roquette Corporation under the product designation Roquette 70/02 Liquid;

(2) the crystalline sorbitol powder was in the beta form and was obtained from Pfizer Inc.;

(3) the methyl cellulose had a Brookfield viscosity of 0.012 to 0.018 Pa.s (12 to 18 cps) for a 2% aqueous solution at 25°C;

(4) the hydroxypropyl cellulose had a Brookfield viscosity of not less than 0.145 Pa.s (145 cps) for a 10% aqueous solution at 25°c; and

(5) the hydroxypropyl methyl cellulose had a Brookfield viscosity of 0.012 to 0.018 Pa.s (12 to 18 cps) for a 2% aqueous solution at 25°C.

Also, in the examples that follow, the chewing gum composition used as the cores, had a moisture content of about 1.5 wt % based on the weight of the chewing gum composition.

Additionally, in the examples that follow, unless indicated otherwise, a coating layer applied is dried before a subsequent layer is applied.

All percentages recited throughout the specification are based on the weight of solution used unless indicated otherwise.

Unless indicated otherwise, in the Examples that follow the procedures and formulations used were as in Example I.

EXAMPLE I

In this Example, representative of the invention, the sorbitol coated chewing gum cores of Table 3 were 31 prepared in a CHICLETS® (Trademark of Warner-Lambert Company) type format.

Solutions A&B, used in making the coated cores are set forth in Tables 1 and 2 respectively. The solutions were prepared using a Colloidal Mill Gifford-Wood Co. homo-mixer.

In the preparation of the solutions, the order of mixing the ingredients is critical. However, as those skilled in the art can appreciate, the celluloses which are solids are difficult to disperse. Therefore, solutions containing them are conveniently made by first dispersing the cellulose and the ingredient having the most amount of water. The celluloses are dispersed using high shear (vigorous mixing) generally before any other solid is dissolved in the solution. This dispersion is then milled using the colloid mill, until a smooth, creamy solution is achieved. Milling of the cellulose/water mixture is critical to achieving a homogenous solution. After the colloidal milling, the particle size (mean) of the cellulose particles was about 10 microns with a range of 0.7-15.0 microns.

The coatings obtained were smooth and uniform in color. When chewed, the coatings were hard and crunchy.

Solution A, Table 1, as prepared in two steps. In step 1, an aqueous solution is heated and maintained at 55°C to 60°C and ingredients No. 2 and 4 are added with agitation until they are well dispersed. This dispersion is then milled using a colloid mill set at gap setting 15. To this is added ingredient Nos. 1, 2, 5 & 6 in consecutive order, while mixing between each addition.

## TABLE 1

### SOLUTION A

| NO. | INGREDIENTS | PERCENT (W/W) |
|---|---|---|
| 1 | Saturated Sorbitol Liquid | 76.50 |
| 2 | Crystalline Sorbitol Powder | 16.22 |
| 3 | Methyl Cellulose USP 15 | 0.86 |
| 4 | Hydroxypropyl Cellulose | 0.35 |
| 5 | Calcium Carbonate Precipitated USP | 4.62 |
| 6 | Gum Arabic Powder | 1.45 |
| | | 100.00 |

## TABLE 2

### SOLUTION B

| NO. | INGREDIENTS | PERCENTAGE (W/W) |
|---|---|---|
| 1 | Saturated Sorbitol Liquid | 81.14 |
| 2 | Crystalline Sorbitol Powder | 13.61 |
| 3 | Calcium Carbonate Precipitated USP | 4.04 |
| 4 | Gum Arabic Powder | 1.21 |
| | | 100.00 |

## TABLE 3

### SORBITOL COATED CHEWING GUM

| NO. | INGREDIENTS | PERCENTAGE W/W |
|---|---|---|
| 1 | Chewing Gum Cores | 63.000 |
| 2 | Solution A | 30.373 |
| 3 | Solution B | 6.450 |
| 4 | Peppermint Flavor Oil | 0.135 |
| 5 | FD&C Green No. 1 | 0.017 |
| 6 | Wax | 0.025 |
| | | 100.00 |

Solution B, Table 2 was prepared by adding ingredient No. 4 to about 10% of ingredient No. 1 at room temperature and mixing for about 10 minutes. The dispersion is then heated to about 60°C, milled and added to the remaining amount of ingredient No. 1. Ingredients Nos. 2 and 3 are then mixed in and the solution is allowed to cool to 25°C to 35°C for using in processing and coating. The specific gravity at 30°C is 1.25, the viscosity at 30°C is 0.120 ± 0.020 Pa.s (120 cps ±20cps), measured with a Brookfield Viscometer, model LVT, spindle at 3 at 30 RPM for one minute.

The sorbitol coated chewing gum of Table 2 was prepared by placing the chewing gum cores in the copper pan of the coating unit. The pan was rotated until all of the sheets were broken into individual cores, i.e., all the cores were separated.

Solution A (Table 1), was then applied to the cores in small portions with intermittent drying at about 50°C - 58°C until the coated cores had about a 28% total shell coating, based on the weight of the total coated comestible. At between about a 13% to 27% total shell coating, 1.5g of peppermint oil were applied respectively. At between about a 18% to about 31% total shell coating, 2.0 g of FD&C Green No. 1 dye was applied.

Solution B (Table 2), was applied next at room temperature in small portions again with intermittent drying until the total shell coating on the core was about 37%. At a total shell coating of about 32%, 1.5g of peppermint flavor oil was applied.

When the coated cores were dry they were placed in a polishing pan and wax coated. The polishing time was about 25 to about 30 minutes.

## EXAMPLE II

In this example, representative of the invention, the sorbitol coated chewing gum cores of Table 8 were prepared. Solutions C and D used in making the coated core are set forth in Tables 4 and 5, respectively. When coated the coating produced on the chewing gum was smooth with an even color distribution. When product was evaluated it was found that the coating provided a hard and crunchy chew similar to sugared Chiclets®.

## TABLE 4

### SOLUTION C

| NO. | INGREDIENTS | PERCENTAGE W/W |
|---|---|---|
| 1 | Saturated Sorbitol Liquid USP FCC | 80.00 |
| 2 | Crystalline Sorbitol Powder S692 | 11.00 |
| 3 | Calcium Carbonate Precipitated USP | 4.50 |
| 4 | Hydroxypropyl Cellulose | 0.40 |
| 5 | Methyl Cellulose USP 15 | 0.90 |
| 6 | Gum Arabic Powder | 1.00 |
| 7 | Water Deionized | 2.20 |
| | | 100.00 |

## TABLE 5

### SOLUTION D

| NO. | INGREDIENTS | PERCENTAGE W/W |
|---|---|---|
| 1 | Saturated Sorbitol Liquid USP FCC | 86.00 |
| 2 | Crystalline Sorbitol Powder S692 | 10.00 |
| 3 | Calcium Carbonate Precipitated USP | 3.00 |
| 4 | Gum Arabic Powder | 1.00 |
| | | 100.00 |

## TABLE 6

### COLOR GREEN SHADE SOLUTION

| NO. | INGREDIENTS | PERCENTAGE W/W |
|---|---|---|
| 1 | Green Shade Color (96% purity) | 4.00 |
| 2 | Water, Deionized | 96.00 |
| | | 100.00 |

## TABLE 7

### SEALANT AND POLISHING AGENTS

| NO. | INGREDIENTS | PERCENTAGE W/W |
|---|---|---|
| 1 | Wax Candelilla Powdered | 100.00 |

## TABLE 8

### SORBITOL COATED CHEWING GUM

| NO. | INGREDIENTS | PERCENTAGE W/W |
|-----|-------------|----------------|
| 1 | Chewing Gum Cores | 60.00 |
| 2 | Solution A | 30.00 |
| 3 | Solution B | 9.00 |
| 4 | Peppermint Flavor Oil | 0.25 |
| 5 | FD&C Green NO. 1 | 0.25 |
| 6 | Wax | 0.05 |
| | | 100.00 |

The solutions were prepared using a Colloidal Mill, Gifford-Wood Co., in a similar fashion as previously described. The coated chewing gum, Table 8, was prepared as follows:

Solution C (Table 4) was applied until the coated cores contained 32% total shell coating, based on the weight of the total coated comestible. At between about 13%, 30% and 33% coating (total shell coating) 3.0 g of peppermint oil was applied. At between about 18% to about 33% (total shell coating) 1.0 g of FD&C Green No. 1 dye was applied.

Solution D (Table 5) was applied next in small portions again with intermittent drying until the total shell coating was about 40% (total shell coating) 1.5 g of FD&C Green No. 1 dye was applied. When the coated cores were dried and conditioned, they were placed in a Canvas-lined Polishing pan. The polishing pan was started, revolving at 26-33 RPM with warm air being applied (30-35°C) for 10 minute prior to the addition of the polishing-sealant agent, which is then applied. The total polishing time was about 25 to about 30 minutes.

EXAMPLE III

In this example, representative of the invention, the sorbitol coated chewing gum cores of Table 13 were prepared. Solutions E and F were prepared similarly as in Example I and II; however, no gum arabic was used in solution E. Solution G was prepared and used as the sealant agent.

The coatings obtained were smooth, hard, with crunchiness and even color distribution.

Solutions E and F, used in making the coated cores are set forth in Tables 9 and 10 respectively. The solutions were prepared using a Colloidal Mill and a Gifford-Woods Co. (Homogenizer).

As in the Example I the comments noted apply in the preparation of the solutions.

## TABLE 9

### SOLUTION E

| NO. | INGREDIENTS | PERCENTAGE W/W |
|-----|-------------|----------------|
| 1 | Saturated Sorbitol Liquid USP FCC | 70.00 |
| 2 | Crystalline Sorbitol Powder S692 | 18.00 |
| 3 | Calcium Carbonate Precipitated USP | 7.00 |
| 4 | Hydroxypropyl Cellulose | 2.00 |
| 5 | Methyl Cellulose USP 15 | 2.00 |
| 6 | Water Deionized | 1.00 |
| | | 100.00 |

11

## TABLE 10
### SOLUTION F

| NO. | INGREDIENTS | PERCENTAGE W/W |
|---|---|---|
| 1 | Saturated Sorbitol Liquid USP FCC | 79.00 |
| 2 | Crystalline Sorbitol Powder S692 | 15.00 |
| 3 | Calcium Carbonate Precipitated USP | 4.00 |
| 4 | Gum Arabic Powder | 1.00 |
| 5 | Water Deionized | 1.00 |
| | | 100.00 |

## TABLE 11
### SOLUTION G

| NO. | INGREDIENTS | PERCENTAGE W/W |
|---|---|---|
| 1 | Water Deionized | 75.00 |
| 2 | Gum Arabic Powder | 25.00 |
| | | 100.00 |

## TABLE 12
### COLOR GREEN SHADE SOLUTION

| NO. | INGREDIENTS | PERCENTAGE W/W |
|---|---|---|
| 1 | Green Shade Color (96% purity) | 4.00 |
| 2 | Water, Deionized | 96.00 |
| | | 100.00 |

## TABLE 13

### SORBITOL COATED CHEWING GUM

| NO. | INGREDIENTS | PERCENTAGE W/W |
|-----|-------------|----------------|
| 1 | Chewing Gum Cores | 70.00 |
| 2 | Solution E | 20.00 |
| 3 | Solution F | 7.21 |
| 4 | Solution G | 2.00 |
| 5 | Peppermint Flavor Oil | 0.19 |
| 6 | FD&C Green No 1 | 0.20 |
| 7 | Wax | 0.40 |
| | | 100.00 |

Solution E (Table 9) was prepared in two steps as in Example 1. Ingredient No. 6 was heated and maintained at about 55°C to about 60°C for approximately 5 minutes, at which time ingredients Nos. 4 and 5 were admixed into it. The mixture was milled with a colloid mill with a gap setting of 15. The mixture was cooled to 35 to 45°C to obtain a Brookfield viscosity at 40°C of 0.35 to 0.40 Pa.s (350 to 400 cps), spindle #30 at 30 RPM for one minute. The second step is to add to this dispersion ingredient No.1, while mixing at room temperature until a homogenous mixture is obtained. This mixture is then heated to about 55°C ±3°C, at which time ingredients Nos. 2 and 3 were added. The specific gravity at 55°C was 1.5; the Brookfield viscosity at 55°C was 0.100 Pa.s (100 cps) using spindle #3 at 30 RPM for one minute.

Solution F (Table 10) was prepared similarly to Solution E. Ingredient No. 4 was added to 10% of the total ingredient No. 1 at room temperature and mixed for about 10 minutes. The resultant dispersion was heated to about 60°C, milled and the remainder of ingredient No. 1. was added at room temperature. The solution was then heated again to about 50° to about 58°C and ingredients Nos. 2 and 3 were added and mixed in to obtain a solution having a specific gravity at 30°C of 1.23 and a Brookfield viscosity at 30°C of 0.110 ± 0.020 Pa.s (110 ± 20 cps) using spindle #3 at 30 RPM for one minute.

Solution G (Table III) was prepared by mixing cooled ingredient No. 1 (20-25°C) with ingredient No. 2 to form a dispersion. The dispersion is then milled as in previous Examples. The solution was then heated for about 5 to 10 minutes at about 80°C to about 90°C before use.

The sorbitol coated chewing gum of Table 12 was prepared by placing the chewing gum cores in the copper pan of the coating unit. The pan was rotated until all of the sheets were broken into individual cores, i.e., all the cores were separated.

Solution E (Table 9), was then applied to the cores in small portions with intermittent drying at about 50°C to about 58°C, until the coated cores had 23% total shell coating, based on the weight of the total coated comestible. At between about 10% and 20% total shell coating 1.0 gm of peppermint oil was applied respectively. At between about 15% to about 23% total shell coating 1.5 gm of FD&C Green No. 1 dye was applied.

Solution F (Table 10), was applied next at room temperature in small portions again with intermittent drying until the total shell coating on the core was about 30%. At a total shell coating of about 25%, 1.0 gm of peppermint oil was applied.

At between about a 23% to about 30% total shell coating 1.5 gm of the FD&C Green No. 1 dye was applied.

Solution G was applied next in small portions with intermittent drying until the total shell coating of the core was about 30.5% total shell coating based on the weight of the total coated comestible. At between about 30% to about 30.5% total shell coating 0.3 to 0.5 gm of the FD&C Green No. 1 dye was applied.

EXAMPLE IV

In this example, representative of the invention, the sorbitol coated chewing gum cores of Table 18 were prepared. Solutions A, B and G were prepared similarly as in Example I and II. However, no gum arabic was used in Solution A. Solution G was prepared and used as the sealant agent. Solutions were used in making the coated chewing gum cores as set forth in Tales 14 and 16 respectively. Solution G was prepared as in Example III.

## TABLE 14

### SOLUTION A

| NO. | INGREDIENTS | PERCENTAGE (W/W) |
|---|---|---|
| 1 | Saturated Sorbitol Liquid USP FCC | 75.00 |
| 2 | Crystalline Sorbitol Powder S692 | 15.00 |
| 3 | Calcium Carbonate Precipitated USP | 3.00 |
| 4 | Polyethylene Glycol | 3.00 |
| 5 | Methyl Cellulose USP 15 | 1.50 |
| 6 | Hydroxypropyl Methyl Cellulose | 1.50 |
| 7 | Water Deionized | 1.00 |
| | | 100.00 |

## TABLE 15

### SOLUTION B

| NO. | INGREDIENTS | PERCENTAGE (W/W) |
|---|---|---|
| 1 | Saturated Sorbitol Liquid USP FCC | 80.00 |
| 2 | Crystalline Sorbitol Powder S692 | 12.00 |
| 3 | Calcium Carbonate Precipitated USP | 5.00 |
| 4 | Propylene Glycol USP | 2.00 |
| 5 | Gum Arabic Powder | 1.00 |
| | | 100.00 |

## TABLE 16

### SOLUTION G

| NO. | INGREDIENTS | PERCENTAGE W/W |
|---|---|---|
| 1 | Water Deionized | 75.00 |
| 2 | Gum Arabic Powder | 25.00 |
| | | 100.00 |

## TABLE 17

### COLOR ORANGE SOLUTION

| NO. | INGREDIENTS | PERCENTAGE W/W |
|---|---|---|
| 1 | Water Deionized | 90.00 |
| 2 | FD&C Yellow | 10.00 |
| | | 100.00 |

14

## TABLE 18

| NO. | INGREDIENTS | PERCENTAGE W/W |
|---|---|---|
| 1 | Chewing Gum Cores | 63.00 |
| 2 | Solution A | 26.49 |
| 3 | Solution B | 7.27 |
| 4 | Solution G | 2.75 |
| 5 | Natural Orange Flavor | 0.16 |
| 6 | Orange Color, FD&C Yellow No. 6 Dye | 0.20 |
| 7 | Wax | 0.03 |
| | | 100.00 |

Solution A (Table 14), was prepared in the same manner as in Example I. When the solution was milled and completely homogenous it was removed from the homogenizer and heated and maintained at about 50 to about 55°C with agitation during use. Solution A was applied at abut 50 to about 55°C; preferably about 51 to about 53°C.

Solution B (Table 15), was prepared similarly to Example III, whereby ingredients Nos. 4 and 5 were added to 10% of ingredient No. 1 and milled. Ingredients Nos. 2 and 3 were then added as in previous Examples.

Solution G (Table 16), the sorbitol coated chewing gum of Table 18 was prepared by placing the chewing gum cores in the coated pan of the coating unit. The pan was rotated until all the sheet were broken into individual cores, i.e., all the cores were separated.

Solution A (Table 14), was the applied to the cores in small portion with intermittent drying at about 50°C to about 58C until the coated cores had about a 28 to about 30% total shell coating, based on the weight of the total coated comestible. At between about 13% to about 27& total shell coating about 2.0 gm of the Natural Orange Flavor were applied. At between about 18% to about 31% total shell coating, about 1.0 gm of FD&C Yellow No. 6 dye was applied.

Solution B (Table 15), was applied next at room temperature in small portions again with intermittent drying until the total shell coating on the core was about 37%. At a total shell coating of about 32%, about 1.0 gm of the Natural Orange Flavor was applied. At about 28% to 37% 1.0 g of FD&C Yellow No. 6 dye was applied.

Solution G (Table 16), was then applied next in small portions again with intermittent drying until the total shell coating of the core was about 37.5% to about 38.0% total shell coating, based on the weight of the total coated comestible. At about 37% to about 38% total shell coating, 0.3 to 0.5 gm of the FD&C Yellow No. 6 dye was applied.

EXAMPLE V

In this example, representative of the invention the sorbitol coated compressed tablet candy cores of Table 22 were prepared. Solutions H and J used in making the coated cores are set forth in Tables 19 and 20. Solutions were prepared similarly to Example II. When product was coated the coating produced on the compressed tablet was smooth with an even color distribution. When product was chewed it was found that the coating was hard and provided good texture while dissolving in the mouth.

## TABLE 19

### SOLUTION H

| NO. | INGREDIENTS | PERCENTAGE W/W |
|---|---|---|
| 1 | Saturated Sorbitol Liquid USP FCC | 81.00 |
| 2 | Crystalline Sorbitol Powder S692 | 12.00 |
| 3 | Calcium Carbonate Precipitated USP | 2.60 |
| 4 | Hydroxypropyl Methyl Cellulose USP | 0.43 |
| 5 | Hydroxypropyl Cellulose NF Type EF | 0.23 |
| 6 | Gum Arabic Powder, USP | 0.04 |
| 7 | Water, Deionized | 3.70 |
|  |  | 100.00 |

## TABLE 20

### SOLUTION J

| NO. | INGREDIENTS | PERCENTAGE W/W |
|---|---|---|
| 1 | Saturated Sorbitol Liquid USP FCC | 90.00 |
| 2 | Crystalline Sorbitol Powder S692 | 7.00 |
| 3 | Hydroxypropyl Methyl Cellulose USP | 2.00 |
| 4 | Gum Arabic Powder, USP | 1.00 |
|  |  | 100.00 |

## TABLE 21

### COLOR ORANGE SOLUTION

| NO. | INGREDIENTS | PERCENTAGE W/W |
|---|---|---|
| 1 | Water Deionized | 90.00 |
| 2 | FD&C Yellow No. 6 | 10.00 |
|  |  | 100.00 |

## TABLE 22
### SORBITOL COATED COMPRESSED TABLET

| NO. | INGREDIENTS | PERCENTAGE W/W |
|---|---|---|
| 1 | Compressed Tablet Candy Cores | 60.00 |
| 2 | Solution H | 32.00 |
| 3 | Solution J | 7.80 |
| 4 | Natural Orange Flavor | 0.15 |
| 5 | Orange Color, FD&C Yellow No. 6 | 0.02 |
| 6 | Wax | 0.03 |
| | | 100.00 |

The solutions H and J were prepared using a Colloidal Mill, Gifford-Wood Co. (Homogenizer), using the methods described as in Example I. The sorbitol coated compressed tablet candy cores of Table 22 were prepared by placing the candy cores in the copper pan of the coating unit. The pan was rotated until all of the cores were clean and dedusted.

The compressed tablet candy cores were prepared utilizing conventional methods known to all involved in the art. As an illustration the following product formulation is described:

## TABLE 23
### COMPRESSED TABLET CANDY CORES FORMULATION

| NO. | INGREDIENTS | PERCENTAGE W/W |
|---|---|---|
| 1 | Sorbitol Liquid Neosorb 20/60 | 50.88 |
| 2 | Crystalline Sorbitol Powder | 46.26 |
| 3 | Magnesium Stearate, FCC, NF | 1.00 |
| 4 | Aspartame | 0.04 |
| 5 | Citric Acid USP Granular | 1.00 |
| 6 | Natural Orange Flavor | 0.80 |
| | | 100.00 |

Solution H (Table 19) was then applied to the cores in small portions with intermittent drying at 50°C (122°F) to 55°C (131°F) until the coated cores have 32% to about 34% total shell coating, based on the weight of the total coated comestible. At between 8% to 32%, 2.0 g of the Natural Orange Flavor were applied.

At between about 1% to about 34% total shell coating 1.0 g of the FD&C Yellow No. 6 was applied.

Solution J (Table 20) was applied next in small portions again with intermittent drying until the total shell coating on the core was about 40%. At a total shell coating of about 34% to about 35% 2.0 g of the Natural Orange Flavor were applied. At between about 34% to 40% total shell coating 1.0 g of the FD&C Yellow No. 6 was applied.

When the coated cores were dried and conditioned, they were placed in a canvas-lined polishing pan. The polishing pan was started revolving at 26-33 RPM and warm air (30-35°C) was applied for 20 minutes prior to the addition of the polishing-sealant agent which was then applied. The total polishing time was about 25 to 30 minutes.

EXAMPLE VI

In this example representative of the invention, the sorbitol coated compressed tablet candy cores of Table 27 were prepared. Solutions H and J were prepared similarly a in Example V. When product was coated it was found that the coating products on the compressed tablet was smooth with an even color distribution. When product was chewed it was found that the coating was hard and provided good texture while dissolving in the mouth.

## TABLE 24

### SOLUTION H

| NO. | INGREDIENTS | PERCENTAGE W/W |
|---|---|---|
| 1 | Saturated Sorbitol Liquid USP FCC | 81.00 |
| 2 | Crystalline Sorbitol Powder S692 | 12.00 |
| 3 | Calcium Carbonate Precipitated USP | 2.60 |
| 4 | Methyl Cellulose USP 15 | 0.43 |
| 5 | Hydroxypropyl Cellulose NF Type EF | 0.23 |
| 6 | Gum Arabic Powder, USP | 0.04 |
| 7 | Water, Deionized | 3.70 |
| | | 100.00 |

## TABLE 25

### SOLUTION J

| NO. | INGREDIENTS | PERCENTAGE W/W |
|---|---|---|
| 1 | Saturated Sorbitol Liquid USP FCC | 90.00 |
| 2 | Crystalline Sorbitol Powder S692 | 7.00 |
| 3 | Methyl Cellulose NF Type ER | 2.00 |
| 4 | Gum Arabic Powder, USP | 1.00 |
| | | 100.00 |

## TABLE 26

### RED COLOR SOLUTION

| NO. | INGREDIENTS | PERCENTAGE W/W |
|---|---|---|
| 1 | Water Deionized | 97.00 |
| 2 | FD&C Red No. 40 | 2.99 |
| 3 | FD&C Blue No. 1 | 0.01 |
| | | 100.00 |

## TABLE 27

### SORBITOL COATED COMPRESSED TABLET

| NO. | INGREDIENTS | PERCENTAGE W/W |
|---|---|---|
| 1 | Compressed Tablet Candy Core | 60.00 |
| 2 | Solution H | 32.00 |
| 3 | Solution J | 7.80 |
| 4 | Cherry Flavor Imitation | 0.15 |
| 5 | Red Color Blend | 0.02 |
| 6 | Wax | 0.03 |
| | | 100.00 |

The solutions H and J were prepared using a Colloidal Mill, Gifford-Wood Co. (Homogenizer) using the methods described as in Examples I and V.

The sorbitol compressed tablet candy cores were prepared utilizing conventional methods known to all involved in the art. As an illustration the following product formulation is described:

## TABLE 28

### COMPRESSED TABLET CANDY CORES FORMULATION

| NO. | INGREDIENTS | PERCENTAGE W/W |
|---|---|---|
| 1 | Sorbitol Liquid Neosorb 20/60 | 51.00 |
| 2 | Crystalline Sorbitol Powder | 46.66 |
| 3 | Magnesium Stearate, FCC, NF | 1.00 |
| 4 | Artificial Sweetener | 0.04 |
| 5 | Citric Acid USP Granular | 1.00 |
| 6 | Cherry Flavor Imitation | 0.30 |
| | | 100.00 |

Solution H was then applied to the cores in small portions with intermittent drying at 50°C (122°F) to 55°C (131°F) until the coated cores have about 32% to about 34% total shell coating, based on the weight of the total coated comestible. At between about 8% to about 32% 2.0 gm of the cherry flavor imitation were applied. At between about 1% to about 34% total shell coating 1.5 gm of the red color blend were applied.

Solution J was applied next in small portions again with intermittent drying until the total shell coating on the core was about 40%. At a total shell coating of about 34% to about 35% 2.0 gm of the cherry flavor imitation was applied. At between about 34% to 40% total shell coating 1.5 gm of the red color blend were applied.

When the coated cores were dried and conditioned, they were placed in a canvas-lined polishing pan. The polishing pan was started revolving at 26-33 RPM and warm air (30-35°C) was applied for 10 minutes prior to the addition of the polishing-sealant agent which was then applied. The total polishing time was about 25 to 30 minutes.

CHEW PANEL TEST RESULTS

The Hedonic Chew Panel evaluation was conducted utilizing a Hedonic Acceptability test with experienced in-house panelists and with outside consumers. The Hedonic attributes evaluated were as follows: crunch, flavor liking, texture liking, sweetness liking, color-appearance liking and overall liking, and evaluated at 15 seconds for crunch, 2 minutes and 10 minutes chew time for all other attributes.

The results obtained are shown in Table 29. The Chew Panel tests conducted for evaluation of the products are well known to those skilled in the art.

These results are applicable to Examples 1 through IV.

## TABLE 29

## HEDONIC RATING

| Attributes | Control-1* | Test Examples I to IV |
|---|---|---|
| Crunch[1] (15 sec) | 3.6 | $5.0^2$ |
| Overall Liking (2 min) | 4.1 | $6.0^2$ |
| Overall Liking (10 min) | 4.6 | $5.8^2$ |
| Flavor Liking (2 min) | 4.4 | $6.2^2$ |
| Flavor Liking (10 min) | 4.7 | $6.2^2$ |
| Sweetness Liking (2 min) | 4.3 | $5.2^2$ |
| Sweetness Liking (10 min) | 4.4 | $5.5^2$ |
| Texture Liking (2 min) | 3.9 | $5.9^2$ |
| Texture Liking (10 min) | 4.0 | $5.8^2$ |
| Color-Appearance Liking | 4.0 | $6.5^2$ |

The Hedonic attributes were rated on a 9-point scale in which:
1 = Dislike Very Much
5 = Neither Like Nor Dislike
9 = Like Very Much

Control-1* Represents a competitive sugarless coated product with about 15% to about 20% total shell coating and with about equivalent and similar flavor.

Crunch[1] was the only attribute evaluated at 15 seconds chew to evaluate hardness, crispiness and texture.

When the results were statistically evaluated they showed the above significant differences where:

[2] Significant difference from Control-1*

Hedonic Chew Panel Test evaluations for Examples V and VI were also conducted via Monadic acceptability test with experienced in-house panelists. The Hedonic attributes were as follows: Flavor Liking, Sweetness Liking, Texture Liking, and Overall Appearance. Attributes evaluation took place within about the first two minutes chew and/or swallowing.

The results obtained are shown in Table 30. The chew panel tests conducted for evaluation of the products are well known to those skilled in the art. These results are applicable to Examples V and VI.

## TABLE 30
### HEDONIC RATING

| Attributes | Control* | Example V |
|---|---|---|
| Flavor Liking | 5.5 | 6.3 |
| Sweetness Liking | 6.7 | 7.0 |
| Texture Liking | 4.8 | 6.0 |
| Color-Appearance Liking | 6.0 | 7.1 |

The Hedonic attributes were rated on a 9-point scale in which:
1 = Dislike Very Much
5 = Neither Like Nor Dislike
9 = Like Very Much

Control* Represents a competitive product with about the same total shell coating and with about equivalent and similar flavor.

With the results were statistically evaluated all of Example V results were shown significantly different from the control.

STABILITY RESULTS

Samples of the Examples representative of the invention were packaged in intended commercialized packages and evaluated for up to twelve months at about 25°C and weekly for up to six weeks at about 30°C to about 37°C. Samples were tested visually and by chew panel evaluation at every time interval for color-appearance, flavor, sweetness, crunch, and chew texture. The samples were judged satisfactory. Results obtained are shown on Tables 31 and 32. Light stability assessment showed comparability to controls (sugar and sugarless coated products) after 24 hours of continuous exposure to a UV light source. Results obtained are shown on Table 33. Friability testing demonstrates that sugarless coated Examples I to IV for gum products and Examples V and VI for compressed tablets candy cores to "chip" (weight loss) less than the control. The results are shown in Table 34.

## TABLE 31

### ORGANOLEPTIC CHEW PANEL EVALUATION RESULTS

#### Storage Conditions About 20°C to About 25°C

| Product | 1Mth | 2Mth | 4Mth | 6Mth | 8Mth | 10Mth | 12Mth | |
|---|---|---|---|---|---|---|---|---|
| Examples I to IV | 3 | 3 | 3 | 3 | 3 | 3 | 3 | 3 |
| Examples V to VI | 3 | 3 | 3 | 3 | 3 | 3 | 3 | 3 |
| Control I to IV | 3 | 3 | 3 | 3 | 3 | 3 | 3 | 3 |
| Control V to VI | 3 | 3 | 3 | 3 | 3 | 3 | 3 | 3 |

## TABLE 32

### ORGANOLEPTIC CHEW PANEL EVALUATION RESULTS

#### Storage Conditions About 30°C to About 35°C

| Product | 1WK | 2WK | 3WK | 4WK | 5WK | 6WK |
|---|---|---|---|---|---|---|
| Examples I to IV | 3 | 3 | 3 | 3 | 3 | 3 |
| Example V to VI | 3 | 3 | 3 | 3 | 3 | 3 |
| Control I to IV | 3 | 3 | 3 | 3 | 3 | 3 |
| Control V to VI | 3 | 3 | 3 | 3 | 3 | 3 |

The Hedonic attributes were rated on a 3 point scale in which:

0 = Unacceptable

1 = Poor

2 = Fair

3 = Good

## TABLE 33

### Color Stability/UV Light Test Results

| Product | 3Hrs | 6Hrs | 9Hrs | 12Hrs | 15Hrs | 18Hrs | 21Hrs | 24Hrs |
|---|---|---|---|---|---|---|---|---|
| Examples I to IV | 3 | 3 | 3 | 3 | 3 | 2 | 2 | 2 |
| Examples V to VI | 3 | 3 | 3 | 3 | 3 | 2 | 2 | 2 |
| Control I to IV | 3 | 3 | 3 | 3 | 2 | 2 | 2 | 2 |
| Control V to VI | 3 | 3 | 3 | 3 | 2 | 2 | 2 | 2 |

The UV light test was conducted in a Sunlighter Model 100 Light Cabinet, Test Lab. Apparatus Inc. Meford NH with two RS4/G 100 Watts bulbs. The method used for evaluation is well known to those skilled in the art. Color stability was rated on a 3 point scale in which:

0 = Total Fading
1 = Some Fading
2 = Minimal Fading
3 = No Fading

## TABLE 34

### FRIABILITY TEST RESULTS

| Product | Percent of Weight Loss (%) |
|---|---|
| Examples I to IV | 0.068 |
| Examples V to VI | 0.001 |
| Control I to IV | 0.100 |
| Control V to VI | 0.050 |

Friability testing was conducted in a Van Der Kamp Friabilator at about 25 RPM. The method used is well known to those skilled in the art.

### Claims

1. A process for producing a sorbitol coated comestible, comprising applying to a substantially anhydrous edible core first and second coating solutions to coat the edible core;
    wherein the first coating solution comprises:
    (a) from 50 to 85 wt % of sorbitol solution comprising from 65 to 75 wt % of sorbitol;
    (b) from 3 to 20 wt % of crystalline sorbitol powder;
    (c) from 0.10 to 10 wt % of at least one film forming agent;
    (d) from 0.10 to 15 wt % of at least one crystallization retardant including powdered gum arabic; and
    (e) water; and
    wherein said second coating solution comprises:
    (a) from 50 to 90 wt % of sorbitol solution comprising from 65 to 75 wt % crystalline sorbitol powder;
    (b) from 5 to 20 wt % of crystalline sorbitol powder;
    (c) from 0.5 to 10 wt % of at least one crystallization retardant including powdered gum arabic; and

(d) water; and

after application of each coating solution, drying the solution to prepare a final comestible.

2. A process according to claim 1, which also includes applying a sealing coating solution to the coated comestible after the second sorbitol coating solution has been applied and dried.

3. A process according to claim 1 or 2, in which more than one layer of first coating solution is applied, after which more than one layer of second coating solution is applied.

4. A process according to claim 1, 2 or 3, wherein the first coating is built up by application of the first coating solution until it constitutes from 28 to 32%, preferably from 30 to 32%, by weight of the coated comestible.

5. A process according to claim 1, 2, 3 or 4, wherein the second coating solution is applied until there is built up a shell coating constituted by the first and second coatings and equivalent to from 30 to 40%, preferably from 33 to 37%, by weight of the coated comestible.

6. A process according to any preceding claim, which also includes applying a solution comprising an additive selected from water soluble FD&C dyes and lakes, flavouring agents and mixtures thereof to the comestible after the first sorbitol coating solution has been applied and before the second sorbitol coating solution is applied.

7. A process according to any preceding claim, wherein the first solution also contains an ingredient selected from plasticizers, moisture absorbents and mixtures thereof, and the second solution also contains an ingredient selected from plasticizers, film-forming agents, and mixtures thereof.

8. A process according to claim 7, wherein the film-forming agent of the first and second coating solutions, is independently selected from hydroxypropyl cellulose, hydroxypropyl methyl cellulose, methyl cellulose, ethyl cellulose, hydroxyethyl cellulose, gelatin and mixtures thereof; and the crystallization retardant of the first and second coating solutions is independently selected from calcium carbonate, powdered gum arabic, talc, magnesium trisilicate and mixtures thereof.

9. A process according to claim 8, wherein the film-forming agent of the first and second solutions comprises hydroxypropyl cellulose and methyl cellulose and the crystallization retardant of the first and second solutions comprises powdered gum arabic and calcium carbonate.

10. A process according to claim 7, 8 or 9, wherein the plasticizer of the first and second solutions is independently selected from polyethylene glycol, polyvinyl pyrrolidone, oligomers of polypropylene glycol, water soluble natural gums, and mixtures thereof; and the moisture absorbent is selected from mannitol, dicalcium phosphate, talc, magnesium stearate, calcium phosphate, calcium sulphate, silicas, and mixtures thereof.

11. A process according to any preceding claim, wherein the edible core comprises chewing gum, candy, or a pill or tablet for medicinal or therapeutic purposes.

12. A process according to claim 3 or to any one of claims 4 to 11 when appendant to claim 3, wherein after an 18 to 30 wt %, preferably 28 to 32%, shell coating has been built up with the first coating solution, a solution comprising a water soluble FD&C dye is applied to said comestible, the dye preferably being FD&C Green No. 1.

13. A process for producing a sorbitol coated comestible, comprising applying to a substantially anhydrous edible core first and second coating solutions to coat the edible core, which process comprises:

(A) repeatedly coating the core with the first coating solution until a shell coating is built up which constitutes from 28 to 32%, preferably from 30 to 32 wt %, of the total coated comestible weight, which first solution comprises

(a) from 25 to 85 wt % sorbitol solution comprising from 65 to 75 wt % sorbitol,

(b) from 3 to 20 wt % crystalline sorbitol powder,

(c) from 0.10 to 10 wt % of at least one film-forming agent, selected from hydroxypropyl cellulose, hydroxypropyl methyl cellulose, methyl cellulose, ethyl cellulose, hydroxyethyl cellulose, gelatin and mixtures thereof,

(d) from 0.10 to 15 wt % of a crystallization retardant comprising powdered gum arabic and calcium

24

carbonate, and

(e) water;

(B) applying to the coated core from 0.01 to 0.2 wt % of a flavouring agent selected from peppermint oil, spearmint oil, oil of wintergreen, fruit flavours and mixtures thereof;

(C) applying to the coated core from 0.01 to 0.05 wt % of a water soluble FD&C dye;

(D) subsequently repeatedly coating said core with the second coating solution until a total shell coating is built up which constitutes from 30 to 40%, preferably from 33 to 37 wt % of the total coated comestible weight, which second solution comprises

(a) from 50 to 90 wt % sorbitol solution comprising from 65 to 75 wt % sorbitol,

(b) from 5 to 20 wt crystalline sorbitol powder,

(c) from 0.5 to 10 wt % of a crystallization retardant comprising powdered gum arabic and calcium carbonate, and

(d) water; and

(E) after application of each coating solution, drying of the comestible to prepare a final comestible.

14. A process according to claim 13, further including applying a sealing coating to the coated comestible after the second coating solution has been applied.

15. A process according to claim 14, wherein the sealing coating comprises a sealant selected from a blend of natural and artificial food grade waxes, candelilla wax and shellac.

16. A process according to claim 13, 14 or 15, wherein the water soluble FD&C dye is FD&C Green No. 1.

17. A process according to any one of claims 13 to 16, wherein the first coating solution contains a plasticizer in an amount of from 0.1 to 1.0 wt %, the second coating solution contains a plasticizer in an amount of from 0.1 to 1.0 wt %, the plasticizer for the first and second solution being selected from polyethylene glycol, polyvinyl pyrrolidone, oligomers of polypropylene glycol, water soluble natural gums and mixtures thereof.

18. A process according to any one of claim 13 to 17, wherein the film forming agent comprises a mixture of hydroxypropyl cellulose and methyl cellulose.

19. A process according to any one of claims 13 to 18, wherein the crystallization retardant further includes one or more ingredient selected from talc and magnesium trisilicate.

20. A process according to any one of claims 13 to 19, wherein the first coating solution contains a moisture absorbent selected from mannitol, dicalcium phosphate, talc, magnesium stearate, calcium phosphate, calcium sulphate, silicas and mixtures thereof.

21. A process according to claim 20, wherein the plasticizer comprises polyethylene glycol, the film forming agent comprises a mixture of hydroxypropyl cellulose and methyl cellulose, the crystallization retardant comprises a mixture of calcium carbonate and powdered gum arabic, and the moisture absorbent is mannitol.

22. A sorbitol coated comestible product comprising:

an anhydrous edible core;

at least one first coating comprising

(a) from 65 to 75 wt % sorbitol,

(b) from 3 to 30 wt % crystalline sorbitol powder,

(c) from 0.10 to 10 wt % of at least one film forming agent, and

(d) from 0.10 to 15 wt % of at least one crystallization retardant including powdered gum arabic; and

at least one second coating comprising

(a) from 65 to 75 wt % sorbitol,

(b) from 5 to 20 wt % crystalline sorbitol powder, and

(c) from 0.5 to 10 wt % of at least one crystallization retardant including powdered gum arabic.

**Patentansprüche**

1. Verfahren zur Herstellung eines sorbitbeschichteten Lebensmittels durch Applikation einer ersten Beschichtungslösung und einer zweiten Beschichtungslösung auf einen praktisch wasserfreien eßbaren Kern zur Beschichtung desselben, wobei die erste Beschichtungslösung

   (a) 50 bis 85 Gew.-% einer 65 bis 75 Gew.-% Sorbit enthaltenden Sorbitlösung;

   (b) 3 bis 20 Gew.-% eines kristallinen Sorbitpulvers;

   (c) 0,10 bis 10 Gew.-% mindestens eines Filmbildners;

   (d) 0,10 bis 15 Gew.-% mindestens eines Kristallisationshemmittels einschließlich von pulverförmigem Gummi arabicum und

   (e) Wasser; und
   
   die zweite Beschichtungslösung

   (a) 50 bis 90 Gew.-% einer 65 bis 75 Gew.-% kristallinen Sorbitpulvers enthaltenden Sorbitlösung;

   (b) 5 bis 20 Gew.-% kristallinen Sorbitpulvers;

   (c) 0,5 bis 10 Gew.-% mindestens eines Kristallisationshemmittels einschließlich von pulverförmigen Gummi arabicum und

   (d) Wasser umfassen, und

   Trocknen der Lösung nach Applikation jeder Beschichtungslösung zur Herstellung eines fertigen Lebensmittels.

2. Verfahren nach Anspruch 1, bei welchem ferner nach Applikation und Trocknung der zweiten Sorbitbeschichtungslösung auf das beschichtete Lebensmittel eine Versiegelungsbeschichtungslösung appliziert wird.

3. Verfahren nach Anspruch 1 oder 2, bei welchem zunächst mehrere Schichten der ersten Beschichtungslösung aufgetragen und danach mehrere Schichten der zweiten Beschichtungslösung appliziert werden.

4. Verfahren nach Anspruch 1,2 oder 3, wobei der erste Überzug aufgebaut wird, indem so lange die erste Beschichtungslösung aufgetragen wird, bis sie 28 bis 32, vorzugsweise 30 bis 32 Gew.-% des beschichteten Lebensmittels ausmacht.

5. Verfahren nach Anspruch 1, 2, 3 oder 4, wobei die zweite Beschichtungslösung so lange aufgetragen wird, bis ein aus erstem und zweitem Überzug bestehender schalenartiger Überzug entsprechend 30 bis 40, vorzugsweise 33 bis 37 Gew.-% des beschichteten Lebensmittels entstanden ist.

6. Verfahren nach einem der vorhergehenden Ansprüche, bei welchem nach Applikation der ersten Sorbitbeschichtungslösung und vor dem Auftrag der zweiten Sorbitbeschichtungslösung auf das Lebensmittel eine Lösung mit einem Zusatz, ausgewählt aus wasserlöslichen FD&C-Farbstoffen und Pigmentfarbstoffen, Aromastoffen und Mischungen derselben appliziert wird.

7. Verfahren nach einem der vorhergehenden Ansprüche, wobei die erste Lösung ferner einen Bestandteil, ausgewählt aus Plastifizierungsmitteln, Feuchtigkeit absorbierenden Mitteln und Mischungen derselben, und die zweite Lösung ferner einen Bestandteil, ausgewählt aus Plastifizierungsmitteln, Filmbildnern und Mischungen derselben, enthalten.

8. Verfahren nach Anspruch 7, wobei der Filmbildner der ersten und zweiten Beschichtungslösungen unabhängig aus Hydroxypropylcellulose, Hydroxypropylmethylcellulose, Methylcellulose, Ethylcellulose, Hydroxyethylcellulose, Gelatine und Mischungen derselben und das Kristallisationshemmittel der ersten und zweiten Beschichtungslösung unabhängig aus Calciumcarbonat, pulverförmigem Gummi arabicum, Talkum, Magnesiumtrisilikat und Mischungen derselben ausgewählt sind.

9. Verfahren nach Anspruch 8, wobei der Filmbildner der ersten und zweiten Lösungen Hydroxypropylcellulose und Methylcellulose und das Kristallisationshemmittel der ersten und zweiten Lösungen pulverförmiges Gummi arabicum und Calciumcarbonat umfassen.

10. Verfahren nach Ansprüchen 7, 8 oder 9, wobei das Plastifizierungsmittel der ersten und zweiten Lösungen unabhängig aus Polyethylengylkol, Polyvinylpyrrolidon, Oligomeren von Polypropylenglykol, wasserlöslichen natürlichen Gummies und Mischungen derselben und das Feuchtigkeit absorbierende Mittel aus Mannit, Dicalciumphosphat, Talkum, Magnesiumstearat, Calciumphosphat, Calciumsulfat, Siliciumdioxiden und Mischungen derselben ausgewählt sind.

11. Verfahren nach einem der vorhergehenden Ansprüche, wobei der eßbare Kern Kaugummi, Zuckerwerk oder eine Pille oder Tablette zu medizinischen oder therapeutischen Zwecken umfaßt.

12. Verfahren nach Anspruch 3 oder einem der Ansprüche 4 bis 11 in Abhängigkeit von Anspruch 3, wobei nach Ausbilden eines 18 bis 30, vorzugsweise 28 bis 32 Gew.-% ausmachenden schalenartigen Überzugs mit Hilfe der ersten Beschichtungslösung auf das Lebensmittel eine einen wasserlöslichen FD&C-Farbstoff, vorzugsweise FD&C-Grün Nr. 1, enthaltende Lösung appliziert wird.

13. Verfahren zur Herstellung eines sorbitbeschichteten Lebensmittels durch Applizieren einer ersten Beschichtungslösung und einer zweiten Beschichtungslösung auf einen praktisch wasserfreien eßbaren Kern zur Beschichtung desselben, umfassend:

(A) wiederholtes Beschichten des Kerns mit der ersten Beschichtungslösung bis zum Erhalt eines schalenartigen Überzugs, der 28 bis 32, vorzugsweise 30 bis 32 Gew.-% des Gesamtgewichts des beschichteten Lebensmittels ausmacht, wobei die erste Lösung

(a) 25 bis 85 Gew.-% einer 65 bis 75 Gew.-% Sorbit enthaltenden Sorbitlösung;

(b) 3 bis 20 Gew.-% eines kristallinen Sorbitpulvers;

(c) 0,10 bis 10 Gew.-% mindestens eines Filmbildners; ausgewählt aus Hydroxypropylcellulose, Hydroxypropylmethylcellulose, Methylcellulose, Ethylcellulose, Hydroxyethylcellulose, Gelatine und Mischungen derselben.

(d) 0,10 bis 15 Gew.-% mindestens eines Kristallisationshemmittels einschließlich von pulverförmigem Gummi arabicum und

(e) Wasser umfaßt;

(B) Applizieren von 0,01 bis 0,2 Gew.-% eines Aromastoffs, ausgewählt aus Pfefferminzöl, Spearmintöl, Wintergrünöl, Fruchtaromen und Mischungen derselben auf den beschichteten Kern;

(C) Applizieren von 0,01 bis 0,05 Gew.-% eines wasserlöslichen FD&C-Farbstoffs auf den beschichteten Kern;

(D) anschließend wiederholtes Beschichten des Kerns mit der zweiten Beschichtungslösung bis zum Erhalt eines vollständigen schalenartigen Überzugs, der 30 bis 40, vorzugsweise 33 bis 37 Gew.-% des Gesamtgewichts des beschichteten Lebensmittels ausmacht, wobei die zweite Lösung

(a) 50 bis 90 Gew.-% einer 65 bis 75 Gew.-% kristallinen Sorbitpulvers enthaltenden Sorbitlösung;

(b) 5 bis 20 Gew.-% kristallinen Sorbitpulvers;

(c) 0,5 bis 10 Gew.-% eines Kristallisationshemmittels umfassend pulverförmiges Gummi arabicum und Calciumcarbonat und

(d) Wasser umfaßt, und

(E) Trocknen des Lebensmittels nach Applikation der einzelnen Beschichtungslösungen zur Herstellung eines fertigen Lebensmittels.

14. Verfahren nach Anspruch 13, bei welchem weiterhin nach Applikation der zweiten Beschichtungslösung auf das beschichteten Lebensmittel ein Versiegelungsüberzug aufgebracht wird.

15. Verfahren nach Anspruch 14, wobei der Versiegelungsüberzug ein Versiegelungsmittel, ausgewählt aus einer Mischung aus natürlichen und künstlichen Wachsen für Nahrungsmittelzwecke, Kandelillawachs und Schellack umfaßt.

16. Verfahren nach Anspruch 13, 14 oder 15, wobei der wasserlösliche FD&C-Farbstoff aus FD&C-Grün Nr. 1 besteht.

17. Verfahren nach einem der Ansprüche 13 bis 16, wobei die erste Beschichtungslösung 0,1 bis 1,0 Gew.-% eines Plastifizierungsmittels und die zweite Beschichtungslösung 0,1 bis 1,0 Gew.-% eines Plastifizierungsmittels enthalten, wobei das Plastifizierungsmittel der ersten und zweiten Lösungen aus Polyethylenglykol, Polyvinylpyrrolidon, Oligomeren von Polypropylenglykol, wasserlöslichen natürlichen Gummis und Mischungen derselben ausgewählt ist.

18. Verfahren nach einem der Ansprüche 13 bis 17, wobei der Filmbildner ein Gemisch aus Hydroxypropylcellulose und Methylcellulose umfaßt.

19. Verfahren nach einem der Ansprüche 13 bis 18, wobei das Kristallisationshemmittel zusätzlich einen oder

EP 0 415 656 B1

mehrere Bestandteil(e), ausgewählt aus Talkum und Magnesiumtrisilicat, einschließt.

20. Verfahren nach einem der Ansprüche 13 bis 19, wobei die erste Beschichtungslösung ein Feuchtigkeit absorbierendes Mittel, ausgewählt aus Mannit, Dicalciumphosphat, Talkum, Magnesiumstearat, Calciumphosphat, Calciumsulfat, Silicumdioxiden und Mischungen hiervon enthält.

21. Verfahren nach Anspruch 20, wobei das Plastifizierungsmittel Polyethylenglykol, der Filmbildner ein Gemisch aus Hydroxypropylcellulose und Methylcellulose, das Kristallisationshemmittel ein Gemisch aus Calciumcarbonat und pulverförmigem Gummi arabicum und das Feuchtigkeit absorbierende Mittel Mannit umfassen.

22. Sorbitbeschichtetes Nahrungsmittel, umfassend einen wasserfreien eßbaren Kern;
    mindestens einen ersten Überzug mit
    (a) 65 bis 75 Gew.-% Sorbit,
    (b) 3 bis 30 Gew.-% kristallinen Sorbitpulvers,
    (c) 0,10 bis 10 Gew.-% mindestens eines Filmbildners und
    (d) 0,10 bis 15 Gew.-% mindestens eines Kristallisationshemmittels einschließlich von pulverförmigem Gummi arabicum und
    mindestens einen zweiten Überzug mit
    (a) 65 bis 75 Gew.-% Sorbit,
    (b) 5 bis 20 Gew.-% kristallinen Sorbitpulvers und
    (c) 0,5 bis 10 Gew.-% mindestens eines Kristallisationshemmittels einschließlich von pulverförmigem Gummi arabicum.

## Revendications

1. Un procédé de préparation d'un produit comestible recouvert de sorbitol comprenant l'application sur un noyau comestible sensiblement anhydre d'une première et d'une deuxième solutions de revêtement, de façon à recouvrir le noyau comestible dans lequel la première solution de revêtement comprend:
   (a) de 50 à 85% en poids d'une solution de sorbitol comprenant de 65 à 75% en poids de sorbitol;
   (b) de 3 à 20% en poids de sorbitol cristallin pulvérulent ;
   (c) de 0,10 à 10% en poids d'au moins un agent filmogène;
   (d) de 0,10 à 15% en poids d'au moins un agent retardant la cristallisation incluant de la gomme arabique mise sous forme de poudre; et
   (e) de l'eau;
   et dans lequel la seconde solution de revêtement comprend:
   (a) de 50 à 90% en poids d'une solution de sorbitol comprenant de 65 à 75% en poids de poudre de sorbitol cristallin;
   (b) de 5 à 20% en poids de poudre de sorbitol cristallin;
   (c) de 0,5 à 10% en poids d'au moins un agent retardant la cristallisation incluant une gomme arabique mise sous forme de poudre; et
   (d) de l'eau; et
   après application de chaque solution de revêtement, on séche la solution pour préparer le produit comestible final.

2. Un procédé selon la revendication 1, qui comprend également l'application d'une solution d'enrobage sur le produit comestible revêtu après l'application et le séchage de la seconde solution de revêtement à base de sorbitol.

3. Un procédé selon la revendication 1 ou 2, dans lequel plus d'une couche de la première solution de revêtement est appliquée, après quoi, plus d'une couche de la seconde solution de revêtement est appliquée.

4. Un procédé selon la revendication 1, 2 ou 3, caractérisé en ce que le premier revêtement est réalisé par application de la première solution de revêtement jusqu'à ce qu'il constitue de 28 à 32%, et de préférence de 30 à 32% en poids, du produit comestible revêtu.

5. Un procédé selon la revendication 1, 2, 3 ou 4, caractérisé en ce que la seconde solution de revêtement est appliquée jusqu'à ce que le revêtement constitué par les premier et le deuxième revêtements soit équivalent à 30 à 40%, et de préférence à 33 à 37% en poids, du produit comestible revêtu.

6. Un procédé selon l'une quelconque des revendications précédentes, qui inclut également l'application d'une solution comprenant un additif sélectionné parmi les agents aromatisants, les pigments et les colorants FD&C hydrosolubles et leur mélange sur le produit comestible après que la première solution de revêtement ait été appliquée et avant que la deuxième solution de revêtement n'ait été appliquée.

7. Un procédé selon l'une quelconque des revendications précédentes, caractérisé en ce que la première solution contient également un ingrédient sélectionné parmi les agents plastifiants, les agents absorbant l'humidité et leurs mélanges et la seconde solution contient également un ingrédient sélectionné parmi les agents plastifiants, les agents filmogènes et leurs mélanges.

8. Un procédé selon la revendication 7, caractérisé en ce que l'agent filmogène contenu dans les première et la seconde solutions de revêtement est sélectionné indépendamment parmi l'hydroxypropylcellulose, l'hydroxypropylméthylcellulose, le méthylcellulose, l'éthylcellulose, l'hydroxyéthylcellulose, la gélatine et leurs mélanges; et l'agent retardant la cristallisation contenu dans les première et seconde solutions de revêtement est indépendamment sélectionné parmi le carbonate de calcium, la gomme arabique mise en poudre, le talc, le trisilicate de magnésium et leurs mélanges.

9. Un procédé selon la revendication 8, caractérisé en ce que l'agent filmogène contenu dans la première et la deuxième solutions comprend l'hydroxypropylcellulose et le méthylcellulose et l'agent retardant la cristallisation contenu dans la première et la seconde solution comprend la gomme arabique en poudre et le carbonate de calcium.

10. Un procédé selon la revendication 7, 8 ou 9, caractérisé en ce que l'agent plastifiant contenu dans les première et seconde solutions est sélectionné indépendamment parmi le polyéthylèneglycol, polyvinylpyrrolidone, des oligomères de polypropylèneglycol, gommes naturelles hydrosolubles et leurs mélanges; et l'agent absorbant l'humidité est choisi parmi le mannitol, phosphate dicalcique, talc, stéarate de magnésium, phosphate de calcium, sulfate de calcium, silice et leurs mélanges.

11. Un procédé selon l'une quelconque des revendications précédentes, caractérisé en ce que le noyau comestible comprend de la gomme à mâcher, du sucre ou une pilule ou un comprimé destinés à un usage médicinal ou thérapeutique.

12. Un procédé selon la revendication 3 ou selon l'une quelconque des revendications 4 à 11, qui sont dépendantes de la revendication 3, caractérisé en ce que, après que 18 à 30% en poids, de préférence 28 à 32% en poids du revêtement aient été réalisés avec la première solution de revêtement, une solution comprenant un colorant FD&C hydrosoluble est appliquée sur ledit produit comestible, le colorant étant de préférence du vert FD&C n°1.

13. Un procédé de préparation d'un produit comestible revêtu de sorbitol comprenant l'application sur un noyau comestible sensiblement anhydre de première et seconde solutions de revêtement de façon à enrober le noyau, lequel procédé comprend:
    (A) le revêtement successif dudit noyau avec la première solution de revêtement jusqu'à ce que le revêtement réalisé constitue de 28 à 32% et de préférence de 30 à 32% en poids du poids total du produit comestible revêtu, cette première solution comprenant:
    (a) de 25 à 85% en poids d'une solution de sorbitol comprenant de 65 à 75% en poids de sorbitol,
    (b) de 3 à 20% en poids de sorbitol cristallin en poudre,
    (c) de 0,10 à 10% en poids d'au moins un agent filmogène sélectionné parmi hydroxypropylcellulose, hydroxypropylméthylcellulose, méthylcellulose, éthylcellulose, hydroxyéthylcellulose, gélatine et leurs mélanges,
    (d) de 0, 10 à 15% en poids d'un agent retardant la cristallisation comprenant du carbonate de calcium et de la gomme arabique en poudre, et
    (e) de l'eau;
    (B) l'application sur le noyau revêtu de 0,01 à 0,2% en poids d'un agent aromatisant sélectionné parmi l'essence de menthe poivrée, essence de menthe verte, essence de wintergreen, arômes de fruits et leurs mélanges;
    (C) l'application sur le noyau enrobé de 0,01 à 0,05% en poids d'un colorant FD&C hydrosoluble;

(D) l'enrobage successif dudit noyau avec la seconde solution de revêtement jusqu'à ce que le revêtement total réalisé constitue 30 à 40%, et de préférence 33 à 37% en poids du poids total du produit comestible enrobé et la seconde solution comprenant:

    (a) de 50 à 90% en poids d'une solution de sorbitol comprenant de 65 à 75% en poids de sorbitol,

    (b) de 5 à 20% en poids de sorbitol cristallin en poudre,

    (c) de 0,5 à 10% en poids d'un agent retardant la cristallisation comprenant du carbonate de calcium et de la gomme arabique pulvérulente, et

    (d) de l'eau; et

(E) après application de chaque solution de revêtement, séchage du produit comestible pour préparer le produit comestible final.

**14.** Un procédé selon la revendication 13, comprenant de plus l'application d'un revêtement d'enrobage sur le produit comestible revêtu après que la seconde solution de revêtement ait été appliquée.

**15.** Un procédé selon la revendication 14, caractérisé en ce que le revêtement d'enrobage comprend un matériau pour rendre hermétique choisi parmi un mélange associant shellac, de candelilla et cires artificielles et naturelles de qualité alimentaire.

**16.** Un procédé selon la revendication 13, 14 ou 15, caractérisé en ce que le colorant FD&C hydrosoluble est le vert FD&C n°1.

**17.** Un procédé selon l'une quelconque des revendications 13 à 16, caractérisé en ce que la première solution de revêtement contient un agent plastifiant en une quantité de 0,1 à 1,0% en poids, la seconde solution de revêtement contient un agent plastifiant en une quantité de 0,1 à 1,0% en poids, l'agent plastifiant présent dans la première et la seconde solutions étant sélectionné parmi polyéthylèneglycol, polyvinylpyrrolidone, oligomères de polypropylèneglycol, gomme naturel hydrosoluble et leurs mélanges.

**18.** Un procédé selon l'une quelconque des revendications 13 à 17, caractérisé en ce que l'agent filmogène comprend un mélange d'hydroxypropylcellulose et de méthylcellulose.

**19.** Un procédé selon l'une quelconque des revendications 13 à 18, caractérisé en ce que l'agent retardant la cristallisation comprend de plus un ou plusieurs ingrédients sélectionnés parmi le talc et le trisilicate de magnésium.

**20.** Un procédé selon l'une quelconque des revendications 13 à 19, caractérisé en ce que la première solution de revêtement contient un agent absorbant l'humidité sélectionné parmi le mannitol, le phosphate dicalcique, le talc, le stéarate de magnésium, le phosphate de calcium, le sulfate de calcium, la silice et leurs mélanges.

**21.** Un procédé selon la revendication 20, caractérisé en ce que l'agent plastifiant comprend du polyéthylèneglycol, l'agent filmogène comprend un mélange d'hydroxypropylcellulose et de méthylcellulose, l'agent retardant la cristallisation comprend un mélange de carbonate de calcium et de gomme arabique pulvérulente, et l'agent absorbant l'humidité correspond au mannitol.

**22.** Un produit comestible revêtu de sorbitol comprenant:

  - un noyau comestible anhydre;

  - au moins un premier revêtement comprenant:

    (a) de 65 à 75% en poids de sorbitol;

    (b) de 3 à 30% en poids d'une poudre de sorbitol cristallin;

    (c) de 0,10 à 10% en poids d'au moins un agent filmogène; et

    (d) de 0,10 à 15% en poids d'au moins un agent retardant la cristallisation incluant la gomme arabique mise en poudre; et

  - au moins un second revêtement comprenant:

    (a) de 65 à 75% en poids de sorbitol;

    (b) de 5 à 20% en poids de poudre de sorbitol cristallin; et

    (c) de 0,10 à 10% en poids d'au moins un agent retardant la cristallisation incluant de la gomme arabique mise en poudre.